**Europäisches Patentamt**

**European Patent Office**

**Office européen des brevets**

(19)

(11) Numéro de publication: **0 236 184**
**B1**

(12)

# FASCICULE DE BREVET EUROPÉEN

(45) Date de publication du fascicule du brevet:
**21.09.88**

(51) Int. Cl.⁴: **F 16 G 13/06**

(21) Numéro de dépôt: **87400204.1**

(22) Date de dépôt: **29.01.87**

(54) **Chaîne, notamment pour cycle muni d'un dérailleur.**

(30) Priorité: **10.02.86 FR 8601777**

(43) Date de publication de la demande:
**09.09.87 Bulletin 87/37**

(45) Mention de la délivrance du brevet:
**21.09.88 Bulletin 88/38**

(84) Etats contractants désignés:
**DE ES FR GB IT**

(56) Documents cité:
**FR-A-812 827**
**GB-A-439 196**

(73) Titulaire: **COMPAGNIE DES TRANSMISSIONS MECANIQUES SEDIS, Tour Avenir Ouest 64, Rue du 8 Mai 1945, F-92025 Nanterre Cédex (FR)**
Titulaire: **SACHS- HURET S.A., 60, Avenue Félix Faure, F-92000 Nanterre (FR)**

(72) Inventeur: **Ingold, Alain François Claude, 8 rue Cernuschi, F-75017 Paris (FR)**

(74) Mandataire: **Moncheny, Michel, c/o Cabinet Lavoix 2 Place d'Estienne d'Orves, F-75441 Paris Cedex 09 (FR)**

EP 0 236 184 B1

## Description

La présente invention concerne les chaînes destinées notamment à équiper des cycles munis de dérailleurs.

D'une façon plus précise, l'invention concerne une chaîne formée de maillons alternés, respectivement intérieurs et extérieurs, chaque maillon intérieur comprenant une paire de plaques intérieures parallèles, et chaque maillon extérieur comprenant une paire de plaques extérieures, parallèles entre elles et aux plaques intérieures, les maillons intérieurs et extérieurs étant articulés entre eux autour d'axes perpendiculaires auxdites plaques. Une chaîne ayant ces caractéristiques est connu du FR-A-812 827.

Ces chaînes ont fait l'objet de diverses adaptations destinées à en réduire la largeur et à faciliter le passage d'un pignon à l'autre lors d'une opération de déraillage.

Cependant, un aspect particulier de cette opération de déraillage n'a semble t-il, pas été pris en compte dans les diverses chaînes existantes: au cours d'une opération de passage d'un rapport à un autre, lors de l'actionnement du dérailleur, la chaîne est déplacée latéralement par un galet guide-chaîne et ce guidage n'est réalisé que par la coopération entre un ou deux maillons intérieurs de la chaîne et une partie de la périphérie du galet. La venue en prise du maillon intérieur sur le galet ne s'effectue que sur une distance radiale très faible, de sorte que le guidage latéral de la chaîne n'est pas très efficace et que la chaîne tend donc à se dégager du galet et à se décaler par rapport au plan médian de ce dernier.

Dans la pratique, ce guidage imparfait conduit le plus souvent à actionner le dérailleur au-delà de la position qui correspondrait à un engrènement de la chaîne sur le pignon de roue libre choisi, puis à l'actionner dans le sens inverse pour le ramener dans cette position.

On a également cherché à améliorer le guidage de la chaîne en donnant au galet des formes relativement complexes, ce qui a pour conséquence d'en augmenter le coût et en tout état de cause, cette adaptation n'a pas permis d'obtenir de résultat très significatif.

L'objectif recherché par l'invention consiste donc à réaliser une chaîne qui, par sa configuration même, permette d'améliorer très sensiblement les conditions de guidage latéral, lors d'opérations de déraillage.

A cet effet, l'invention a pour objet une chaîne du type précité, comportant une face destinée à recevoir les dents des pignons, et une face opposée, destinée à coopérer avec un galet-guide chaîne caractérisée en ce que les plaques extérieures de cette chaîne comportent dans une partie centrale de leur bord situé sur ladite face opposée, une partie en saillie dirigée vers l'intérieur de la chaîne, lesdites parties en saillie délimitant entre elles un intervalle de largeur réduite dans lequel peut s'engager, avec un jeu latéral réduit, ledit galet guide-chaîne.

Suivant d'autres caractéristiques:
- comme connu en soi, le bord de chaque plaque extérieure, situé sur ladite face opposée de la chaîne est convexe;
- comme connu en soi, le bord de chaque plaque extérieure situé sur la face de la chaîne recevant les dents des pignons comporte une partie centrale concave, et de plus, cette partie concave s'étend au moins jusqu'au voisinage d'une ligne joignant les deux axes d'articulation de la plaque considérée.
- ladite partie en saillie est ménagée dans la partie la plus excentrée du bord de la plaque extérieure;
- ladite partie en saillie a une forme conique et est obtenue par déformation du bord de la plaque extérieure.

L'invention va être décrite ci-dessous en se référant à un mode de réalisation particulier. Cette description va être faite en se référant aux dessins annexés, donnés à titre d'exemple et sur lesquels:

- la Fig. 1 est une vue en élévation de la face interne d'une plaque extérieure selon l'invention;
- la Fig. 2 est une vue de dessus de cette plaque;
- la Fig. 3 en est une vue en coupe suivant la ligne 3 - 3 de la Fig. 1;
- la Fig. 4 est une vue schématique représentant le trajet d'une chaîne passant sur un pignon de roue libre et sur des galets de guidage et de tension;
- la Fig. 5 est une vue en élévation illustrant le passage d'une chaîne suivant l'invention sur un galet guide-chaîne;
- la Fig. 6 est une vue partielle en coupe suivant la ligne 6 - 6 de la Fig. 5;
- les Fig.7 et 8 sont des vues correspondant à celles des Fig. 5 et 6 pour une chaîne appartenant à l'état de la technique.

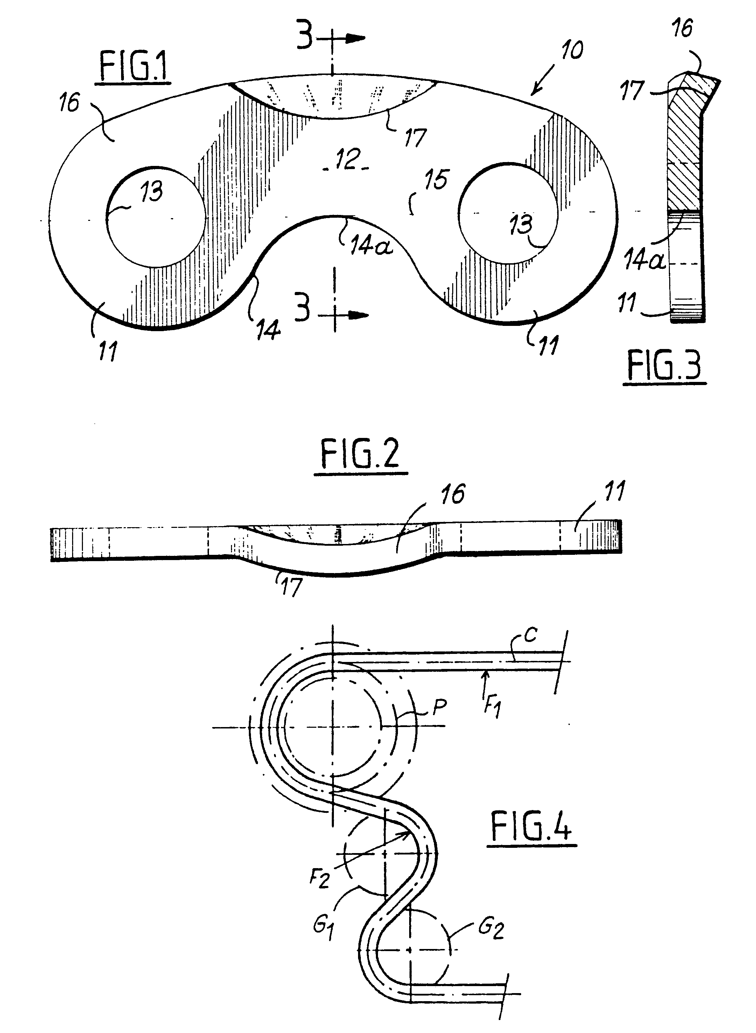

On a représenté aux Fig. 1 à 3 une plaque extérieure 10 suivant l'invention, destinée à être utilisée dans une chaîne équipant par exemple des cycles munis de dérailleurs.

Cette plaque comporte deux parties d'extrémité 11 de forme circulaire et une partie centrale 12. Dans chaque partie d'extrémité est prévu un orifice 13 de forme également circulaire destiné à recevoir un axe d'articulation entre deux maillons adjacents. Le bord inférieur 14 de la plaque (en considérant la Fig.1) a dans sa partie centrale 14a une forme concave très marquée et le fond de cette portion concave s'étend jusqu'au voisinage ou même au-delà de la ligne 15 joignant les centres des orifices 13. Ce bord inférieur de la plaque est celui qui correspond à la face de la chaîne dirigée vers les dents des pignons avec lesquels cette chaîne est destinée à coopérer. Le bord interne de cette partie concave peut être chanfreiné, pour améliorer l'opération de déraillage. Dans le même but, cette partie 14 peut être déformée latéralement vers l'extérieur.

Le bord opposé 16 c'est-à-dire le bord supérieur en considérant la Fig. 1 a une forme convexe et dans une zone centrale de ce bord supérieur, la plaque est cambrée ou déformée, de façon à délimiter une partie 17 en saillie sur une face qui sera dirigée vers l'intérieur de la chaîne.

Dans l'exemple représente, cette partie en saillie est constituée par un cambrage de forme conique.

Le mode de fonctionnement et les avantages d'une chaîne comprenant des plaques extérieures telles que représentées sur les Fig. 1 à 3 vont être décrits en se référant aux Fig. 4 à 8.

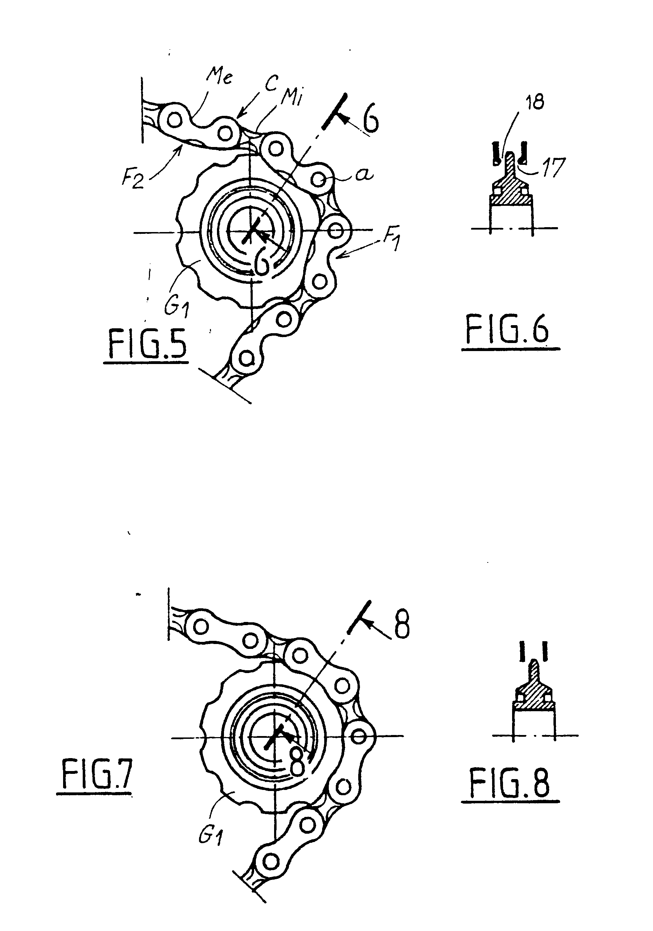

On a représenté sur la Fig. 4 le trajet d'une chaîne C passant sur un pignon P d'une roue libre et sur deux galets respectivement, guide-chaîne G1 et tendeur G2. Cette chaîne est formée de maillons intérieurs Mi et de maillons extérieurs Me articulés autour d'axes $a$ (Fig. 5). Il ressort clairement de ce schéma que la face $F_1$ de la chaîne qui reçoit les dents des pignons est également celle qui est amenée à coopérer avec le galet tendeur $G_2$. Par contre, c'est la face $F_2$ opposée de la chaîne qui passe sur le galet guide-chaîne $G_1$.

Cette coopération de la chaîne et du galet $G_1$ est représentée à plus grande échelle sur les Fig. 5 et 6.

Grâce à la présence des parties en saillie 17 il est clair que l'intervalle 18 entre elles a une largeur réduite et que le jeu entre le bord des plaques extérieures et les flancs du galet est très sensiblement réduit (voir Fig. 6). Cet effet est encore accru par le fait que cette partie en saillie est délimitée dans un bord de la plaque extérieure qui, étant convexe, se trouve plus proche de l'axe du galet. Ceci est d'autant plus intéressant qu'en général l'épaisseur du galet augmente au fur et à mesure que l'on se rapproche de son axe.

La comparaison avec l'état de la technique peut être faite en se reportant aux Fig. 7 et 8. On voit très nettement sur ces deux Figures que la partie centrale des plaques extérieures ne joue aucun rôle dans le guidage de la chaîne par le galet et que ce guidage n'est effectué par les plaques des maillons intérieurs que sur une épaisseur radiale très faible du galet.

Le fait de donner au bord supérieur 16 des plaques extérieures une forme convexe permet de plus de creuser davantage le bord opposé 14 de la plaque, tout en conservant dans la zone centrale de cette dernière une quantité de matière suffisante permettant de transmettre les efforts appliqués à la chaîne. Or, il est important que cette partie concave, le cas échéant chanfreinée intérieurement ou déformée vers l'extérieur, puisse remonter assez haut dans la plaque, car cela facilite le passage de la chaîne sur une denture, principalement lors du passage d'un pignon déterminé à un pignon de plus grand diamètre.

Bien entendu, l'invention peut être appliquée à différents types de chaînes, et notamment quelle que soit la forme donnée aux plaques intérieures constituant les maillons intérieurs et quels que soient la réalisation des axes d'articulation et le mode d'articulation des maillons intérieurs sur ces axes.

## Revendications

1. Chaîne, notamment pour cycle muni d'un dérailleur, formée de maillons alternés, respectivement intérieurs (Mi) et extérieurs (Me), chaque maillon intérieur comprenant une paire de plaques intérieures, parallèles, et chaque maillon extérieur (Me) comprenant une paire de plaques extérieures (10), parallèles entre elles et aux plaques intérieures, les maillons intérieurs et extérieurs étant articulés entre eux autour d'axes (a) perpendiculaires auxdites plaques, cette chaîne comportant une face (F1) destinée à recevoir les dents des pignons (P), et une face opposée (F2), destinée à coopérer avec un galet guide-chaîne (G1), caractérisée en ce que les plaques extérieures (10) de cette chaîne comportent dans une partie centrale de leur bord (16) situé sur ladite face opposée (F2), une partie en saillie (17) dirigée vers l'intérieur de la chaîne, lesdites parties en saillie (17) délimitant entre elles un intervalle (18) de largeur réduite dans lequel peut s'engager, avec un jeu latéral réduit, ledit galet guide-chaîne (G1).

2. Chaîne suivant la revendication 1, caractérisée en ce que le bord (16) de chaque plaque extérieure, situé sur ladite face opposée (F2) de la chaîne est convexe.

3. Chaîne suivant la revendication 2, caractérisée en ce que, comme connu en soi, le, bord (14) de chaque plaque extérieure (10) situé face (F1) de la chaîne recevant les dents des pignons (P) comporte une partie centrale concave (14a), et de plus, cette partie concave s'étend au moins jusqu'au voisinage d'une ligne (15) joignant les deux axes d'articulation (a) de la plaque considérée.

4. Chaîne suivant les revendications 1 et 2, caractérisée en ce que ladite partie en saillie (17) est ménagée dans la partie la plus excentrée du bord (16) de la plaque extérieure (10).

5. Chaîne suivant l'une quelconque des revendications 1 à 4, caractérisée en ce que ladite partie en saillie (17) est obtenue par déformation du bord (16) de la plaque extérieure (10).

6. Chaîne suivant la revendication 5, caractérisée en ce que ladite partie en saillie (17) a une forme conique.

## Claims

1. A chain, more particularly for a cycle having a derailleur formed by alternating inner (Mi) and outer (Me) links respectively, each inner link (Mi) comprising a pair of parallel inner plates, and each outer link (Me) comprising a pair of outer plates (10) parallel with one another and with the inner plates, the inner and outer links being hinged to one another around pivots (a) perpendicular to the plates, and the chain comprising a face (F1) adapted to receive the teeth of the sprockets (P) and an opposite face (F2) adapted to cooperate with a chain guide roller (G1), characterized in that the outer plates (10) of the chain comprise in a central portion of their edge (16) located on said opposite face (F2) a projecting portion (17) directed towards the inside of the chain, said projecting portions (17) bounding between themselves a gap (18) of reduced width in which the chain guide roller (G1) can engage with a reduced lateral clearance.

2. A chain according to claim 1, characterized in that the edge (16) of each outer plate located on the opposite face (F2) of the chain is convex.

3. A chain according to claim 2, characterized in that the edge (14) of each outer plate (10) located on the face (F1) of the chain receiving the teeth of the sprockets (P) comprises a concave central portion (14a) and moreover said concave portion extends at least as far as adjacent a line (15) joining the two pivots (a) of the plate in question.

4. A chain according to claims 1 and 2, characterized in that said projecting portion (17) is provided in the most eccentric portion of the edge (16) of the outer plate (10).

5. A chain according to one of claims 1 to 4, characterized in that said projecting portion (17) is obtained by the deformation of the edge (16) of the outer plate (10).

6. A chain according to claim 5, characterized in that said projecting portion (17) is conical in shape.

**Patentansprüche**

1. Kette, insbesondere für ein Fahrrad mit Kettenschaltung, aus sich abwechselnden, inneren (Mi) und äußeren (Me) Kettengliedern, wobei jedes innere Kettenglied ein Paar innere parallele Platten und jedes äußere Kettenglied (Me) ein Paar untereinander und zu den inneren Platten parallele äußere Platten (10) aufweist, die inneren und äußeren Kettenglieder untereinander um zu den Platten senkrechte Achsen (a) beweglich sind, die Kette eine Fläche (F1) zur Aufnahme der Zähne der Kettenzahnkränze (P) und eine gegenüberliegende Fläche (F2) aufweist, die mit einer Kettenleitrolle (G1) kooperiert,

dadurch gekennzeichnet, daß die äußeren Platten (10) dieser Kette einen Randmittelteil (16) auf der gegenüberliegenden Fläche (F2) und einen zum Inneren der Kette gerichteten vorspringenden Teil (17) aufweisen, wobei die vorspringenden Teile (17) untereinander einen Zwischenbereich (18) mit geringerer Breite begrenzen, in den, mit vermindertem Seitenspiel, die Kettenleitrolle (G1) eingreifen kann.

2. Kette nach Anspruch 1, dadurch gekennzeichnet, daß der auf der gegenüberliegenden Fläche (F2) der Kette liegende Rand (16) jeder äußeren Platte konvex ist.

3. Kette nach Anspruch 2, dadurch gekennzeichnet, daß, wie an sich bekannt, der auf der Fläche (F1) der Kette liegende Rand (14) jeder äußeren Platte (10), der die Zähne der Kettenzahnkränze (P) aufnimmt, einen konkaven Mittelteil (14a) aufweist, der sich außerdem bis in die Nähe einer Linie (15), die die beiden Drehachsen (a) verbindet, ausweitet.

4. Kette nach Anspruch 1 und 2, dadurch gekennzeichnet, daß der vorspringende Teil (17) im exzentrischen Teil des Rands (16) der äußeren Platte (10) ausgespart ist.

5. Kette nach einem der Ansprüche 1 bis 4, dadurch gekennzeichnet, daß der vorspringende Teil (17) durch Verformung des Rands (16) der äußeren Platte (10) erhalten wird.

6. Kette nach Anspruch 5, dadurch gekennzeichnet, daß der vorspringende Teil (17) eine konische Form hat.

0 236 184

FIG.1

16

13

12

15

14a

13

3

14

11

11

3

10

17

16

17

16

14a

11

FIG.3

FIG.2

16

11

17

C

P

F₁

F₂

G₁

G₂

FIG.4

1

FIG.5

FIG.6

FIG.7

FIG.8